# EUROPÄISCHE PATENTSCHRIFT

(11) **EP 3 404 205 B1**
(45) Veröffentlichungstag und Bekanntmachung des Hinweises auf die Patenterteilung: **19.08.2020**
(21) Anmeldenummer: 17171851.3
(22) Anmeldetag: 19.05.2017
(51) Int. Cl.: E21D 11/10, G01L 9/00

(54) **BETONDRUCKMESSANORDNUNG**
CONCRETE MANOMETER ASSEMBLY
SYSTÈME DE MESURE DE PRESSION DU BÉTON

(43) Veröffentlichungstag der Anmeldung: 21.11.2018
(73) Patentinhaber: MEVA Schalungs-Systeme GmbH, 72221 Haiterbach (DE)
(72) Erfinder: Walliser, Thomas, 72108 Rottenburg (DE)
(74) Vertreter: Späth, Dieter

(56) Entgegenhaltungen:
- CN-U- 203 929 289
- DE-A1-102016 212 220
- JP-A- H01 248 032
- JP-A- 2014 031 621
- Bundesamt Für Bauwesen: "Schalbeslastung durch Hochleistungsbetone mit fliessfähiger Konsistenz", , 31. Dezember 2009 (2009-12-31), Seiten 1-44, XP055409369, ISBN: 978-3-8167-8053-3 Gefunden im Internet: URL:https://www.irbnet.de/daten/rswb/09049 012795.pdf [gefunden am 2017-09-25]

## Beschreibung

Die Erfindung betrifft eine Betondruckmessanordnung mit einem Betondruckmesser.

Die Erfindung ist insbesondere zur Verwendung an Tunnelschalungen oder auch an einhäuptigen Schalungen vorgesehen, allerdings auch an anderen Schalungen wie doppelhäuptigen Schalungen und Stützenschalungen verwendbar. Tunnelschalungen, ein- und zweihäuptige Schalungen und Stützenschalungen sind Betonschalungen. Beim Betonieren darf flüssiger Frischbeton nicht zu schnell in oder hinter eine Schalung oder zwischen Schalelemente gefüllt werden. Steht der flüssige Frischbeton zu hoch, ist ein Druck auf die Schalung zu groß, so dass sich die Schalung unzulässig verformen oder beschädigt werden kann. Bei entsprechender Betonierhöhe muss der Beton während des Einfüllens des Frischbetons unten bereits aushärten, um eine Überlastung der Schalung zu vermeiden. Eine zulässige Höhe des flüssigen Frischbetons ist auch von der Schalung abhängig.

Die Patentanmeldung JP H01 248 032 A offenbart eine Druckmessanordnung mit einer Membran, die eine Stirnseite einer zylindrischen Druckmessdose verschließt. Koaxial in der Druckmessdose ist ein Druckfühler mit einer Scheibe, die an einer Rückseite der Membran anliegt, und einem Schaft, der zu einer Kraftmessbrücke führt, angeordnet. Die Druckmessdose ist in einen Befestigungsring geschraubt, der nach Art einer Fassung in eine Öffnung einer Schalhaut eingesetzt ist.

Die Patentanmeldung JP 2014 031 621 A offenbart eine Druckmessanordnung, bei der ein Druckmesser mit einer Schraubfassung an einem Loch in einer Schalhaut einer Betonschalung neben einem Betonierstutzen verschraubt ist.

Aufgabe der Erfindung ist, einen Betondruckmesser vorzuschlagen, der ohne Änderung an einer Betonschalung anbringbar ist.

Zur Lösung dieser Aufgabe schlägt die Erfindung eine Betondruckmessanordnung mit einem Betondruckmesser vor, der in einem Betonierstutzen einer Betonschalung, insbesondere einer Tunnelschalung, einer ein- oder zweihäuptigen Schalung oder einer Stützenschalung angeordnet ist. Eine Betonschalung ist üblicherweise aus Rahmenschalelementen zusammengesetzt, die eine Schalhaut und einen Rahmen aufweisen. Die Schalhaut ist üblicherweise eine Platte aus Holz oder Kunststoff, deren Vorderseite beim Betonieren mit Beton in Berührung kommt und den Beton formt. Der Rahmen besteht üblicherweise aus Metall, typischerweise aus Stahl oder Aluminium, ist auf einer dem Beton abgewandten Rückseite der Schalhaut angeordnet und stützt die Schalhaut gegen einen Betondruck von fließfähigem Beton und steift die Schalhaut aus. Bei Tunnelschalungen sind die Schalhaut und der Rahmen eindimensional entsprechend einer Krümmung einer Tunnelwand bzw. Tunneldecke gekrümmt. Auch andere Betonschalungen wie Kunststoffschalungen oder Holzträgerschalungen kommen in Betracht.

Zu einem Einfüllen von fließfähigem Beton hinter eine einhäuptige Schalung oder hinter bzw. auf eine Tunnelschalung sind Öffnungen in der Schalhaut und Betonierstutzen bekannt, die an der Schalhaut und/oder dem Rahmen der Betonschalung angeordnet sind und von der Rückseite der Betonschalung zu der Öffnung in der Schalhaut führen. "Hinter" und "auf" bedeutet auf die Vorderseite der Schalhaut. Die Betonierstutzen sind üblicherweise zylinderrohrförmig mit konstantem Querschnitt. Es gibt standardisierte Betonierstutzen mit einem Innendurchmesser von 100 mm, 125 mm oder 150 mm. Bekannt und verbreitet sind sogenannte Flanschanschlüsse mit einem Ringflansch. Der Ringflansch kann lochscheibenförmig sein und radiale Ringflächen an einer Vorder- und/oder Rückseite aufweisen. Üblich sind spezielle Ringflansche mit einer konischen- oder vorzugsweise kugelförmigen oder ellipsoiden Ringfläche an der Vorder- und/oder Rückseite. Der Ringflansch an einem der Schalhaut fernen Ende des Flanschanschlusses dient einem Anschluss eines Betonierschlauchs oder eines Betonierrohrs einer Betonpumpe. Dabei bildet die der Schalhaut zugewandte Ringfläche an der Rückseite des Ringflansches eine Hinterschneidung zu einer Befestigung des Betonierschlauchs oder des Betonierrohrs durch Hintergriff mit einer Schelle, einer oder mehreren über den Umfang verteilt angeordneten Krallen oder einer sonstigen Kupplung, wobei Schelle oder Krallen hier ebenfalls als Kupplungen bezeichnet werden. Unter einer Kupplung ist hier ein Bauteil zur Befestigung eines Betonierschlauchs, eines Betonierenrohrs oder dergleichen durch Hintergriff der Ringfläche an der Rückseite des Ringflansches des Betonierstutzens, Flanschanschlusses oder dergleichen zu verstehen.

Der Betondruckmesser der erfindungsgemäßen Betondruckmessanordnung mit den Merkmalen des Anspruchs 1 ist lösbar an einer Betonschalung angeordnet, deren Schalhaut eine Öffnung beispielsweise zum Einfüllen von Beton aufweist. Der Betondruckmesser wird insbesondere an einer dem Beton abgewandten Rückseite der Betonschalung bzw. der Schalhaut befestigt. Der Betondruckmesser weist einen zu der Öffnung in der Schalhaut der Betonschalung kongruenten Betondruckfühler und eine Druckmesseinrichtung, die einen auf den Betondruckfühler wirkenden Druck misst, auf. Der Betondruckfühler weist einen der Öffnung in der Schalhaut entsprechenden Umriss und eine vorzugsweise ebene Vorderseite auf. Die Vorderseite kann auch wie oder ungefähr wie die Schalhaut gewölbt sein. Der Betondruckmesser ist vorzugsweise so an der Betonschalung angeordnet, dass die Vorderseite des Betondruckfühlers bündig oder in etwa bündig mit der Vorderseite der Schalhaut der Betonschalung ist. Er verschließt die Öffnung in der Schalhaut während des Betonierens. Der Betondruckmesser kann auch nach einem Einfüllen von Beton durch die Öffnung in der Schalhaut an der Betonschalung angeordnet sein, so dass sein Betondruckfühler die Öffnung verschließt. Es ist kein hermetisch dichter Verschluss der Öffnung in der Schalhaut notwendig, ein geringer Austritt von Beton, der während des Verfestigens des Betons zum Stillstand kommt, ist akzeptabel. Der Betondruckfühler kann folglich etwas kleiner als die Öffnung in der Schalhaut sein bzw. es kann ein Spalt zwischen der Öffnung in der Schalhaut und dem Betondruckfühler des erfindungsgemäßen Betondruckmessers bestehen.

Die Druckmesseinrichtung des Betondruckmessers der erfindungsgemäßen Betondruckmessanordnung kann den Druck des fließfähigen Betons messen, es ist auch eine Messung einer Kraft möglich, die der fließfähige Beton auf den Betondruckfühler ausübt. Diese Kraft ist dem Druck des Betons proportional und damit ein Maß für den Druck des Betons. Der Druck des Betons darf während des Betonierens einen für die verwendete Betonschalung festgelegten oder errechneten Wert nicht überschreiten.

Der Betondruckmesser der erfindungsgemäßen Betondruckmessanordnung ist lösbar in einem Betonierstutzen an einem Ringflansch angeordnet. Dazu kann der Betondruckfühler einen Umriss entsprechend einem Innenquerschnitt des Betonierstutzens aufweisen. Der Betondruckfühler ist dann an die Öffnung in der Schalhaut und den Betonierstutzen angepasst, an dem er verwendet wird. Ist der Betondruckmesser wie vorgesehen befestigt, befindet sich der Betondruckfühler im Betonierstutzen und in der Öffnung der Schalhaut der Betonschalung und verschließt die Öffnung vorzugsweise bündig. Der Betondruckmesser befindet sich in dem Betonierstutzen und kann an einem der Schalhaut abgewandten Ende aus dem Betonierstutzen vorstehen.

Zu einer lösbaren Befestigung an dem Betonierstutzen weist der Betondruckmesser eine Kupplung auf. Unter einer Kupplung ist hier ein Bauteil zur Befestigung des Betondruckmessers an dem Betonierstutzen zu verstehen. Die Befestigung ist formschlüssig durch Hintergriff. Die Kupplung des Betondruckmessers der erfindungsgemäßen Betondruckmessanordnung hintergreift eine Ringfläche an der Rückseite des Ringflansches an einem der Schalhaut der Betonschalung fernen Ende des Betonierstutzens wie eine Kupplung eines Betonierschlauchs oder eines Betonierrohrs, das anstelle des Betondruckmessers an dem Betonierstutzen der Betonschalung befestigt werden kann. Die durch Formschluss haltende Kupplung wird auch als Formschlusskupplung bezeichnet.

Die Erfindung sieht eine lösbare Befestigung des Betondruckmessers in einem Betonierstutzen der Betonschalung mit einer Formschlusskupplung zu einer lösbaren Befestigung durch Formschluss an dem Ringflansch wie er oben erläutert worden ist, vor. Die Kupplung des erfindungsgemäßen Betondruckmessers kann wie die Kupplung zum Anschluss eines Betonierschlauchs oder eines Betonierrohrs an den Betonierstutzen ausgebildet sein.

In bevorzugter Ausgestaltung der Erfindung ist der Betondruckfühler orthogonal zur Schalhaut und/oder in axialer Richtung bzw. in einer Längsrichtung eines Betonierstutzens verstellbar und/oder es ist ein Abstand des Betondruckfühlers von der Druckmesseinrichtung des Betondruckmessers verstellbar. "Orthogonal" schließt eine Verstellbarkeit des Betondruckfühler mit einer Komponente parallel zur Schalhaut, also schräg zur Schalhaut, ein. Zweck der erläuterten Verstellbarkeit des Betondruckfühlers ist seine Anordenbarkeit bündig mit der dem Beton zugewandte Vorderseite der Schalhaut der Betonschalung.

Die erfindungsgemäße Betondruckmessanordnung weist einen Betondruckmesser der vorstehend erläuterten Art auf, der in vorstehend erläuterter Art an einer Betonschalung, in einem Betonierstutzen einer Betonschalung lösbar befestigt ist und einen Betondruckfühler aufweist, der eine Öffnung in der Schalhaut insbesondere bündig verschließt. Es werden insoweit die vorstehenden Erläuterungen in Bezug genommen. Die Erfindung wird nachfolgend anhand eines in der Zeichnung dargestellten Ausführungsbeispiels näher erläutert. Es zeigen:
- Figur 1: eine Stirnansicht einer Tunnelschalung mit einem Betondruckmesser; und
- Figur 2: eine vergrößerte Achsschnittdarstellung einer Betondruckmessanordnung gemäß der Erfindung gemäß Pfeil II in Figur 1.

Die Zeichnung ist eine vereinfachte Darstellung zum Verständnis und zur Erläuterung der Erfindung.

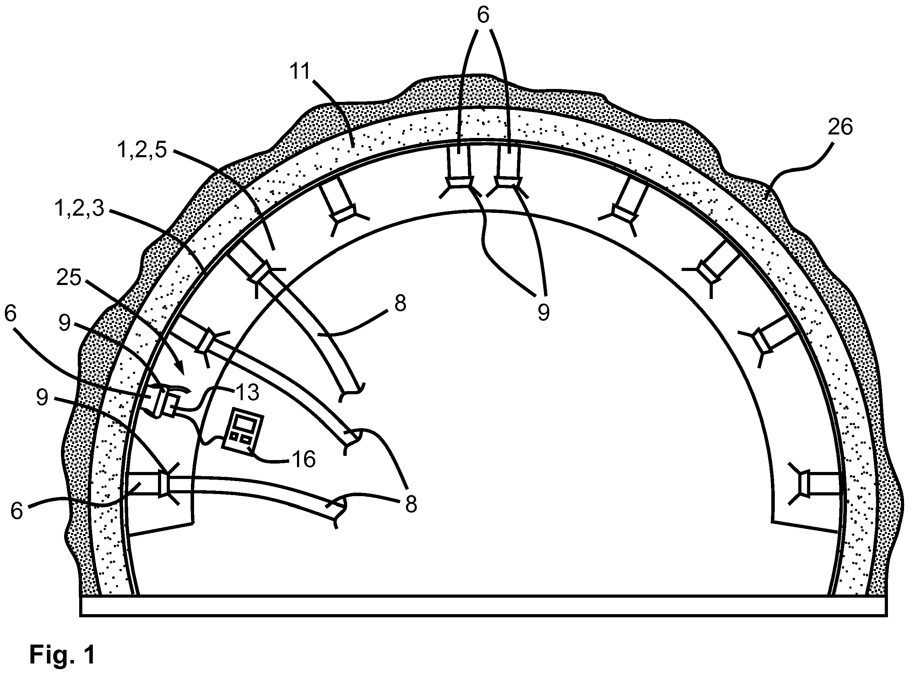

Figur 1 zeigt eine Tunnelschalung 1 als Beispiel einer Betonschalung 2 in einer Stirnansicht. Die Tunnel- bzw. Betonschalung 1, 2 weist eine plattenförmige, aus mehreren Platten zusammengesetzte Schalhaut 3 auf, die auf einer hier als Rückseite 4 bezeichneten Innenseite von spantenartigen Querträgern 5 gehalten und abgestützt wird. Die Querträger 5 sind quer zu einer Längsrichtung eines Tunnels angeordnet und entsprechend einer Krümmung einer Tunnelwand gekrümmt. Ebenfalls ist die Schalhaut 3 eindimensional entsprechend einer Tunnelwand gekrümmt.

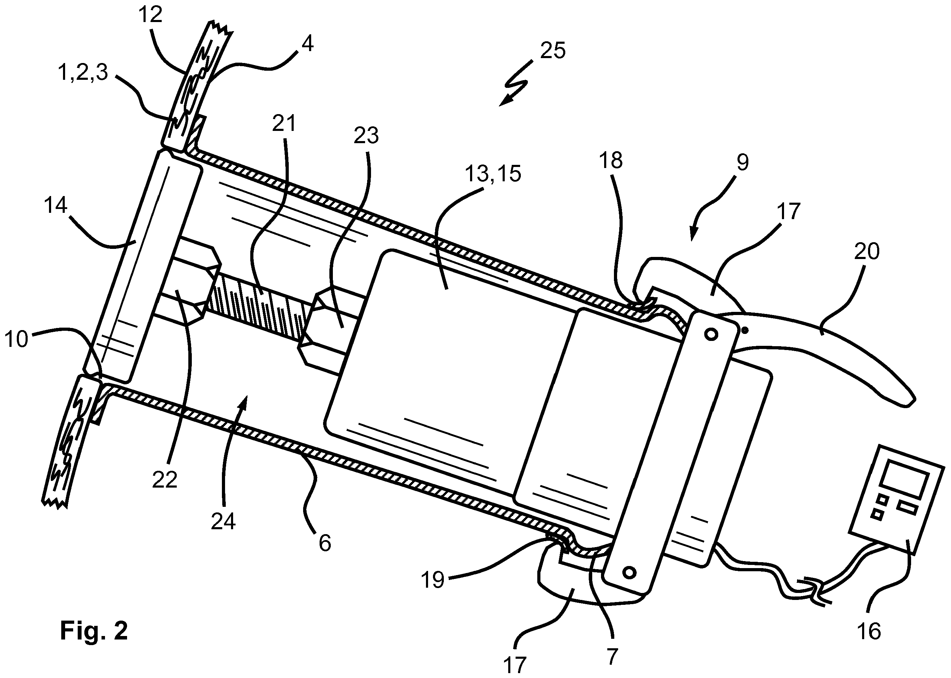

In Abständen in einer Umfangsrichtung weist die Tunnel- bzw. Betonschalung 1, 2 Betonierstutzen 6 zwischen den Querträgern 5 auf. Die Betonierstutzen 6 sind orthogonal bzw. radial zu der Schalhaut 3 angeordnete Zylinderrohre mit einem Ringflansch 7 an einem der Schalhaut 3 fernen Ende (siehe Figur 2), die zu einem Anschluss von Betonierschläuchen 8 oder Betonierrohren mit Formschlusskupplungen 9 dient. Der Schalhaut 3 zugewandte Enden der Betonierstutzen 6 sind deckungsgleich auf kreisförmige Öffnungen 10 in der Schalhaut 3 aufgesetzt, wobei die Öffnungen 10 denselben Durchmesser wie ein Innendurchmesser der Betonierstutzen 6 aufweisen. Durch die Betonierschläuche 8 oder Betonierrohre und die Betonierstutzen 6 lässt sich Beton 11 in fließfähige Zustand hinter die Tunnel- bzw. Betonschalung 1, 2 einfüllen, das heißt auf eine den Querträgern 5 abgewandte Außen- bzw. Vorderseite 12 der Schalhaut 3. Der Beton 11 wird in einen Zwischenraum zwischen der Schalhaut 3 und einen die Schalhaut 3 mit Abstand umschließenden Fels 26, Gestein, Boden, Spritzbeton oder dergleichen eingefüllt, erstarrt dort und bildet eine Tunnelwand.

Im dargestellten und beschriebenen Ausführungsbeispiel sind die Betonierstutzen 6 Standard Betonierstutzen 6 mit einem Innendurchmesser von 100 mm, 125 mm oder 150 mm. Die Betonierstutzen 6 sind Flanschanschlüsse mit standardisiertem Ringflansch 7 an ihren der Schalhaut 3 fernen Enden.

Wie in Figur 2 zu sehen ist in einem oder sind in mehreren der Betonierstutzen 6 ein Betondruckmesser 13 angeordnet. Der Betondruckmesser 13 weist einen im Ausführungsbeispiel kreisscheibenförmigen Betondruckfühler 14 und eine Druckmesseinrichtung 15 auf, die einen von dem Beton 11 auf den Betondruckfühler 14 ausgeübten Druck misst. Der Betondruckfühler 14 ist so groß wie die Öffnung 10 in der Schalhaut 3 und der Betondruckmesser 13 ist so im Betonierstutzen 6 angeordnet, dass der Betondruckfühler 14 bündig mit der Vorderseite 12 der Schalhaut 3 ist und die Öffnung 10 verschließt. Im Ausführungsbeispiel ist die Druckmesseinrichtung 15 ein Kraftmesser, der eine vom Beton 11 auf den Betondruckfühler 14 ausgeübte Kraft misst, die proportional zum Druck des Betons 11 ist. An die Druckmesseinrichtung 15 ist ein Messgerät 16 angeschlossen, das den Betondruck anzeigt.

Der Betondruckmesser 13 ist mit einer Formschlusskupplung 9 in dem Betonierstutzen 6 befestigt, der als Flanschanschluss mit dem Ringflansch 7 an dem der Schalhaut 3 fernen Ende des Betonierstutzen 6 ausgebildet ist. Die Formschlusskupplung 9 hintergreift den Ringflansch 7 des Betonierstutzens 6 bzw. des Flanschanschlusses und hält den Betondruckmesser 13 durch Formschluss und lösbar im Betonierstutzen 6. Die Formschlusskupplung 9 des Betondruckmessers 13 ist wie die Formschlusskupplungen 9 der Betonierschläuchen 8 ausgebildet. Sie weist zwei einander gegenüberliegend angeordnete Krallen 17 auf, die einen Haltering 18 hintergreifen, der auf einer ringförmigen Rückseite des Ringflansches 7 angeordnet ist, die der Schalhaut 3 zugewandt ist und eine Hinterschneidung 19 des Ringflansches 7 bildet. Die beiden Krallen 17 sind gelenkig mit der Formschlusskupplung 9 verbunden, wobei eine der beiden Krallen 17 einen Spannhebel 20 aufweist.

Der Betondruckmesser 13 weist eine Gewindestange 21 auf, deren eines Ende in eine Mutter 22 am Betondruckfühler 14 und deren anderes Ende in eine Mutter 23 an der Druckmesseinrichtung 15 geschraubt ist. Durch Drehen der Gewindestange 21 in der Mutter 23 der Druckmesseinrichtung 15 und/oder durch Drehen des Betondruckfühlers 14 mit seiner Mutter 22 auf der Gewindestange 21 lässt sich ein Abstand des Betondruckfühlers 14 von der Druckmesseinrichtung 15 verstellen, so dass der Betondruckfühler 14 bündig mit der Schalhaut 3 einstellbar ist. Die Gewindestange 21 und die Muttern 22, 23 bilden eine Abstandsverstelleinrichtung 24, mit der der Betondruckfühler 14 orthogonal zur Schalhaut 3 und in axialer Richtung bzw. in einer Längsrichtung des Betonierstutzens 6 verstellbar ist.

Der als Flanschanschluss ausgebildete Betonierstutzen 6 der Tunnel- bzw. Betonschalung 2 bildet mit dem in ihm angeordneten Betondruckmesser 13 eine erfindungsgemäße Betondruckmessanordnung 25. Die Formschlusskupplung 9 hält den Betondruckmesser 13 lösbar im Betonierstutzen 6, nach Öffnen bzw. Lösen der Formschlusskupplung 9 lässt sich der Betondruckmesser 13 mit dem Betondruckfühler 14 aus dem Betonierstutzen 6 entnehmen.

Mit dem Betondruckmesser 13 und der erfindungsgemäßen Betondruckmessanordnung 25 lässt sich in einfacher Weise überwachen, dass der Betondruck während des Betonierens nicht unzulässig steigt.

## Patentansprüche

1. Betondruckmessanordnung mit
- einer Betonschalung (2), die eine Schalhaut (3) mit einer Öffnung (10) und einen an der Öffnung (10) vorgesehenen Betonierstutzen (6) umfasst,
wobei die Betondruckmessanordnung (25) weiter
- einen Betondruckmesser (13), der in dem Betonierstutzen (6) angeordnet ist und einen zu der Öffnung (10) kongruenten Betondruckfühler (14), der sich in der Öffnung (10) der Schalhaut (3) befindet und die Öffnung (10) verschließt, und
- eine Druckmesseinrichtung (15), die einen auf den Betondruckfühler (14) wirkenden Druck misst, aufweist,
**dadurch gekennzeichnet, dass**
- der Betonierstutzen (6) an dem der Schalhaut (3) fernen Ende des Betonierstutzens (6) einen Ringflansch (7) und der Betondruckmesser (13) eine Formschlusskupplung (9) aufweist, die eine Ringfläche an der Rückseite des Ringflansches (7) hintergreift und den Betondruckmesser (13) durch Formschluss und lösbar an dem Betonierstutzen (6) hält.

2. Betondruckmessanordnung nach Anspruch 1, **dadurch gekennzeichnet, dass** der Betondruckfühler (14) kongruent zu einem Innenquerschnitt des Betonierstutzens (6) der Betonschalung (2) ist.

3. Betondruckmessanordnung nach Anspruch 1, **dadurch gekennzeichnet, dass** der Betonierstutzen (6) ein Standard Betonierstutzen (6) ist.

4. Betondruckmessanordnung nach einem der vorhergehenden Ansprüche, **dadurch gekennzeichnet, dass** der Betondruckfühler (14) orthogonal zur Schalhaut (3) und/oder in axialer Richtung des Betonierstutzens (6) der Betonschalung (2) und/oder ein Abstand des Betondruckfühlers (14) von der Druckmesseinrichtung (15) verstellbar ist.

## Claims

1. Concrete pressure measuring arrangement having
- a concrete formwork (2) which comprises a formwork skin (3) having an opening (10) and a concreting nozzle (6) provided at the opening (10),
the concrete pressure measuring arrangement (25) further having
- a concrete pressure gauge (13) which is arranged in the concreting nozzle (6) and a concrete pressure sensor (14) congruent to the opening (10), which sensor is located in the opening (10) of the formwork skin (3) and closes the opening (10), and
- a pressure measuring device (15) which measures a pressure acting on the concrete pressure sensor (14),
**characterised in that**
- the concreting nozzle (6) has an annular flange (7) on the end of the concreting nozzle (6) that is remote from the formwork skin (3), and the concrete pressure gauge (13) has a form-fitting coupling (9) which engages behind an annular surface on the rear side of the annular flange (7) and holds the concrete pressure gauge (13) in a positive-locking manner and detachably on the concreting nozzle (6).

2. Concrete pressure measuring arrangement according to claim 1, **characterised in that** the concrete pressure sensor (14) is congruent to an internal cross section of the concreting nozzle (6) of the concrete formwork (2).

3. Concrete pressure measuring arrangement according to claim 1, **characterised in that** the concreting nozzle (6) is a standard concreting nozzle (6).

4. Concrete pressure measuring arrangement according to any of the preceding claims, **characterised in that** the concrete pressure sensor (14) is adjustable orthogonally to the formwork skin (3) and/or in the axial direction of the concreting nozzle (6) of the concrete formwork (2) and/or the distance of the concrete pressure sensor (14) from the pressure measuring device (15) is adjustable.

## Revendications

1. Agencement de mesure de pression de béton, comportant :
- un coffrage à béton (2) comprenant une enveloppe de coffrage (3) avec une ouverture (10) et une tubulure de bétonnage (6) prévue à l'ouverture (10),
lequel agencement de mesure de pression de béton (25) présente en outre :
- un manomètre à béton (13), qui est disposé dans la tubulure de bétonnage (6), et un capteur de pression de béton (14), qui est congruent à l'ouverture (10), qui se trouve dans l'ouverture (10) de l'enveloppe de coffrage (3) et qui ferme l'ouverture (10), et
- un moyen de mesure de pression (15) qui mesure une pression agissant sur le capteur de pression de béton (14),
**caractérisé en ce que**
- la tubulure de bétonnage (6) présente une bride annulaire (7) à l'extrémité de la tubulure de bétonnage (6) éloignée de l'enveloppe de coffrage (3) et le manomètre à béton (13) présente un accouplement à complémentarité de forme (9) qui vient en prise derrière une surface annulaire sur la face arrière de la bride annulaire (7) et maintient le manomètre à béton (13) par complémentarité de forme et de manière amovible sur la tubulure de bétonnage (6).

2. Agencement de mesure de pression de béton selon la revendication 1, **caractérisé en ce que** le capteur de pression de béton (14) est congruent à une section transversale intérieure de la tubulure de bétonnage (6) du coffrage à béton (2).

3. Agencement de mesure de pression de béton selon la revendication 1, **caractérisé en ce que** la tubulure de bétonnage (6) est une tubulure de bétonnage standard (6).

4. Agencement de mesure de pression de béton selon l'une des revendications précédentes, **caractérisé en ce que** le capteur de pression de béton (14) est réglable orthogonalement à l'enveloppe de coffrage (3) et/ou dans la direction axiale de la tubulure de bétonnage (6) du coffrage à béton (2) et/ou une distance entre le capteur de pression de béton (14) et le moyen de mesure de pression (15) est réglable.
